# EUROPÄISCHE PATENTSCHRIFT

(11) **EP 0 633 412 B1**
(45) Veröffentlichungstag und Bekanntmachung des Hinweises auf die Patenterteilung: **23.10.1996**
(21) Anmeldenummer: 94109439.3
(22) Anmeldetag: 18.06.1994
(51) Int. Cl.: F16H 63/32, G05G 3/00

(54) **Schaltgabel aus Kunststoff mit Metalleinlage für Kraftfahrzeuggetriebe**
Shift fork made of plastic with metal insert for a gearbox of a motor vehicle
Fourchette en matière plastique avec insert métallique pour boîte de vitesses d'un véhicule automobile

(30) Priorität: 07.07.1993 DE 4322586
(43) Veröffentlichungstag der Anmeldung: 11.01.1995
(73) Patentinhaber: GETRAG Getriebe- und Zahnradfabrik Hermann Hagenmeyer GmbH & Cie, D-71636 Ludwigsburg (DE)
(72) Erfinder: Knödel, Gunter, D-75417 Mühlacker (DE); Schaarschmidt, Reinhard, D-75428 Illingen (DE)
(74) Vertreter: Witte, Alexander, Dr.-Ing.

(56) Entgegenhaltungen:
- PATENT ABSTRACTS OF JAPAN vol. 9, no. 90 (P-350) 19. April 1985 & JP-A-59 218 522 (FUJI TEKKOSHO) 8. Dezember 1984
- PATENT ABSTRACTS OF JAPAN vol. 8, no. 248 (P-313) 14. November 1984 & JP-A-59 121 414 (TOYOTA JIDOSHA) 13. Juli 1984
- EUREKA, Bd.10, Nr.4, April 1990, HORTON KIRBY KENT GB Seite 20 'Forged components replaced by carbon PEEK'

## Beschreibung

Die Erfindung betrifft eine Betätigungsvorrichtung für eine Schiebemuffe in eine Kraftfahrzeug-Stufengetriebe, mit einer entlang ihrer Achse verschiebbaren Schaltstange, an der eine Schaltgabel sowie ein Mitnehmer starr angeordnet sind.

Betätigungsvorrichtungen der vorstehend genannten Art sind allgemein bekannt, beispielsweise aus dem DE-Buch "Handbuch der Kraftfahrzeugtechnik" von Buschmann, Koessler; Heyne-Verlag München, 1973, Seite 557 bis 558.

Die bekannten Betätigungsvorrichtungen sind aus mehreren metallischen Bauteilen zusammengesetzt. Typischerweise wird eine metallische Schaltstange verwendet, die durch spanabhebendes Bearbeiten einerseits mit den erforderlichen Rastungen für den Axial-Verschiebeweg der Schaltstange und für die Verhinderung einer Doppelschaltung, andererseits aber auch mit Ausnehmungen für die mechanische Befestigung der Schaltgabel und des Mitnehmers versehen wird. Der Mitnehmer ist typischerweise ebenfalls ein mehrstückiges Bauteil, das vor der Montage auf der Schaltstange gefügt und dann, beispielsweise mittels Verstiftens, drehstarr auf der Schaltstange befestigt wird. Die Schaltgabel ist bei herkömmlichen Vorrichtungen typischerweise ein metallisches Gußteil, beispielsweise ein Aluminium-Gußteil, dessen Führung für die Schiebemuffe, nämlich eine kreissegmentförmige Ringschulter, ebenfalls durch spanabhebendes Bearbeiten auf Sollmaß gebracht werden muß, ehe die Schaltgabel, beispielsweise ebenfalls mittels Verstiftens, auf der Schaltstange befestigt wird.

Betätigungsvorrichtungen dieser Art sind daher in der Herstellung relativ aufwendig, da eine ganze Reihe von Einzelteilen bearbeitet und gefügt werden müssen, bis die Vorrichtung einbaufertig zur Verfügung steht.

Der Erfindung liegt demgegenüber die Aufgabe zugrunde, eine Vorrichtung der eingangs genannten Art dahingehend weiterzubilden, daß eine einfachere Fertigung und damit eine drastische Kostenreduzierung bei der Fertigung möglich sind.

Diese Aufgabe wird erfindungsgemäß dadurch gelöst, daß die Betätigungsvorrichtung als ein Kunststoff-Metall-Verbundbauteil ausgebildet ist, bei dem ein Metallteil, das den Mitnehmer sowie einen Kern für die Schaltstange bildet, mit einem Kunststoff umspritzt ist und die Schaltgabel ausschließlich aus dem Kunststoff besteht.

Die der Erfindung zugrundeliegende Aufgabe wird auf diese Weise vollkommen gelöst.

Durch die Herstellung der Vorrichtung als Kunststoff-Metall-Verbundbauteil wird nämlich eine drastische Vereinfachung und damit Kostensenkung bei der Fertigung erzielt, weil nur noch das Metallteil, das in einfacher Weise als Stanzteil ausgebildet werden kann, in ein Spritzwerkzeug eingelegt werden muß, während das umspritzte Verbundbauteil dann sofort einbaufertig zur Verfügung steht. Damit entfallen alle weiteren Bearbeitungs-und Fügeschritte, wie sie bei herkömmlichen Vorrichtungen erforderlich sind. Darüberhinaus können mit modernen Kunststoff-spritzmethoden derartige Verbundbauteile so exakt hergestellt werden, daß für den vorliegenden Anwendungsfall das Teil bereits in einer Maßhaltigkeit zur Verfügung steht, die es sogleich einbaufertig macht.

Bei der Erfindung wird somit eine Technik, nämlich die Herstellung von Kunststoff-Metall-Verbundbauteilen, eingesetzt, die an sich bekannt ist, allerdings auf dem Gebiet der Kraftfahrzeug-Stufengetriebe nicht nahelag. So sind zum einen Kunststoffteile in derartigen Stufengetrieben als aktive Bauteile unbekannt, weil man seither der Ansicht war, daß die mechanischen und thermischen Eigenschaften von Kunststoffen den Arbeitsbedingungen in einem Kraftfahrzeug-Stufengetriebe nicht standhalten. Darüberhinaus geht der Ersatz eines herkömmlichen metallischen Bauteils durch ein Kunststoffbauteil oder ein Kunststoff-Metall-Verbundbauteil stets mit einer Vergrößerung des Bauvolumens einher, weil man zur Erzielung derselben mechanischen Stabilität bei ganz oder teilweise aus Kunststoff bestehenden Bauteilen größere Abmessungen benötigt, verglichen mit rein metallischen Bauteilen. Diese Vergrößerung der Bauteileabmessungen steht jedoch im Widerspruch zum allgemeinen Entwicklungstrend bei Komponenten für Kraftfahrzeug-Stufengetriebe, bei denen man stets bemüht ist, unter allen Umständen eine Verkleinerung der Bauteile zu erzielen. Es war daher auch aus diesem Grunde nicht naheliegend, ein aktives metallisches Bauteil eines Kraftfahrzeug-Stufengetriebes durch ein Kunststoff-Metall-Verbundbauteil zu ersetzen.

Die Erfindung hat, wie bereits erwähnt, den wesentlichen Vorteil einer drastischen Verringerung des Arbeits- und Kostenaufwandes bei der Herstellung derartiger Betätigungsvorrichtungen. Berechnungen haben ergeben, daß die Herstellkosten derartiger Betätigungsvorrichtungen bei Einsatz der vorliegenden Erfindung auf weniger als die Hälfte gedrückt werden können, möglicherweise sogar auf ein Drittel. Da Kraftfahrzeug-Stufengetriebe Aggregate sind, die in Großserien hergestellt werden, lassen sich auf diese Weise ganz erhebliche Einsparungen und Kostenvorteile erzielen. Auch aus diesem Grunde war der Gegenstand der vorliegenden Erfindung nicht naheliegend, weil man allgemein im Maschinenbau auch im Getriebebau für Kraftfahrzeuge seit geraumer Zeit mit großer Aufmerksamkeit auf die Herstellkosten achtet und es daher als überraschend anzusehen ist, wenn bei einem wichtigen Element des Getriebes durch die erfindungsgemäße Maßnahme eine ganz ungewöhnliche Kostenreduktion erreicht werden kann, die sich auch merklich im Gesamt-Verkaufspreis des Getriebes niederschlägt.

Bei einer bevorzugten Ausgestaltung der erfindungsgemäßen Vorrichtung ist der Kunststoff ein Polyamid, wobei vorzugsweise der Kunststoff glasfaserverstärkt ist.

Es hat sich gezeigt, daß derartige Kunststoffe für das hier interessierende Anwendungsgebiet von besonderem Vorteil sind, weil sie bei den hohen Temperaturen und den hohen mechanischen Belastungen, wie sie in einem Kraftfahrzeug-Stufengetriebe auftreten, als besonders langlebig eingeschätzt werden können. Als besonders geeignet hat sich in diesem Zusammenhang ein glasfaserverstärktes Polyamid erwiesen, das unter der Bezeichnung ZYTEL (eingetragenes Warenzeichen der Firma DuPont) im Handel ist.

Bei einer bevorzugten Ausführungsform der Erfindung sind die den Kern der Schaltstange bildenden Abschnitte des Metallteiles als flaches Rechteckprofil-Material ausgebildet.

Diese Maßnahme hat den bereits erwähnten Vorteil, daß das Teil als einfaches Stanzteil hergestellt werden kann.

Bei einer bevorzugten Weiterbildung dieser Variante sind die Abschnitte des Metallteiles mit einem wellenförmigen Randprofil versehen.

Diese Maßnahme hat den Vorteil, daß die mechanische Stabilität der Vorrichtung erhöht wird.

Bei einem weiteren Ausführungsbeispiel der Erfindung ist die Schaltstange im axialen Abschnitt der Schaltgabel verdickt ausgebildet.

Auch diese Maßnahme hat den Vorteil, die Stabilität der Vorrichtung zu verbessern. Bei diesem Ausführungsbeispiel zeigt sich zusätzlich ein weiterer wesentlicher Vorteil der Erfindung. Bei herkömmlichen Vorrichtungen, die in der erläuterten Weise aus mehreren metallischen Bauelementen gefügt werden, wird nämlich die Schaltstange an dem Ort im Querschnitt vermindert, auf den der Mitnehmer aufgesetzt wird. Dies führt zu einer Schwächung der Schaltstange. Demgegenüber hat die erfindungsgemäße Vorrichtung nicht nur den Vorteil der Einstückigkeit, sie kann darüberhinaus in dem mechanisch besonders beanspruchten axialen Abschnitt, an dem die Schaltgabel angesetzt ist, verdickt werden, damit die Schaltkräfte auch im Langzeitbetrieb störungsfrei aufgebracht werden können.

Bei einer bevorzugten Weiterbildung dieses Ausführungsbeispiels wird die Verdickung im wesentlichen dadurch gebildet, daß eine Mehrzahl radialer Rippen in dem axialen Abschnitt vorgesehen ist.

Diese Maßnahme hat den Vorteil, daß bei geringem Materialeinsatz und damit auch geringem Gewicht eine hohe Stabilität erzielt wird.

Bei einer besonders bevorzugten Gruppe von Ausführungsbeispielen der Erfindung ist die Schaltgabel in einer Wabenstruktur mit einer Mehrzahl von durch Wände voneinander getrennten Kammern ausgebildet.

Auch diese Maßnahme hat den Vorteil, daß bei einem minimalen Materialeinsatz ein Maximum an Festigkeit erzielt werden kann.

Besonders bevorzugt ist bei diesem Ausführungsbeispiel, wenn die Wabenstruktur eine radial von der Schaltstange fort sich zunächst erweiternde und dann wieder verjüngende Gestalt aufweist.

Diese Gestaltung der Struktur hat sich als besonders vorteilhaft im Hinblick auf eine hohe mechanische Stabilität erwiesen.

Bei einer weiteren Variante dieses Ausführungsbeispiels, bei der die Schaltgabel in an sich bekannter Weise eine kreissegmentförmige Schulter zum Eingriff in die Schiebemuffe aufweist, ist die Schulter mindestens teilweise von der Wabenstruktur abgestützt.

Diese Maßnahme hat den Vorteil, daß im unmittelbaren Eingriffsbereich der Schaltgabel an der Schiebemuffe nur eine geringe Baugröße vorhanden ist, während im übrigen die Schaltgabel von der Wabenstruktur optimal abgestützt ist.

Besonders bevorzugt ist bei diesem Ausführungsbeispiel, wenn die Wabenstruktur in axialer Richtung höchstens jeweils zwei von einer Trennwand getrennte Kammern umfaßt und die Schulter radial mit der Trennwand fluchtet.

Diese Maßnahme hat zum einen den Vorteil, daß eine spritztechnisch besonders einfache Lösung entsteht, die nach beiden Seiten hin gut entformbar ist. Andererseits entsteht durch die Fluchtung zwischen der Schulter und der Trennwand eine besonders stabile Struktur.

Weiterhin ist bei diesem Ausführungsbeispiel bevorzugt, wenn die Schulter über einen Teil ihres Umfanges von einer sich im wesentlichen radial erstreckenden Kammer abgestützt ist.

Diese Maßnahme hat den Vorteil, daß ein großer Umfangswinkel der Schulter und damit der Schaltgabel erreicht werden kann, ohne daß Stabilität verloren geht.

Weitere Ausführungsbeispiele der Erfindung mit Wabenstruktur zeichnen sich dadurch aus, daß alle Wände in der selben Dicke ausgeführt sind.

Diese Maßnahme hat den Vorteil, daß bei minimalem Materialeinsatz eine maximale Festigkeit entsteht, und daß ferner die so entstehende Struktur mit verhältnismäßig einfachen Mitteln durch eine Berechnungsmethode mit finiten Elementen berechenbar ist.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine Ansicht, in radialer Richtung, eines Ausführungsbeispiels einer erfindungsgemäßen Betätigungsvorrichtung;
- Fig. 2: die Vorrichtung gemäß Fig. 1, jedoch in axialer Seitenansicht;
- Fig. 3: eine radiale Seitenansicht eines Metallteils, wie es beim Ausführungsbeispiel der Fig. 1 und 2 Verwendung findet, in vergrößertem Maßstab; und
- Fig. 4: eine Schnittansicht entlang der Linie IV-IV von Fig. 2.

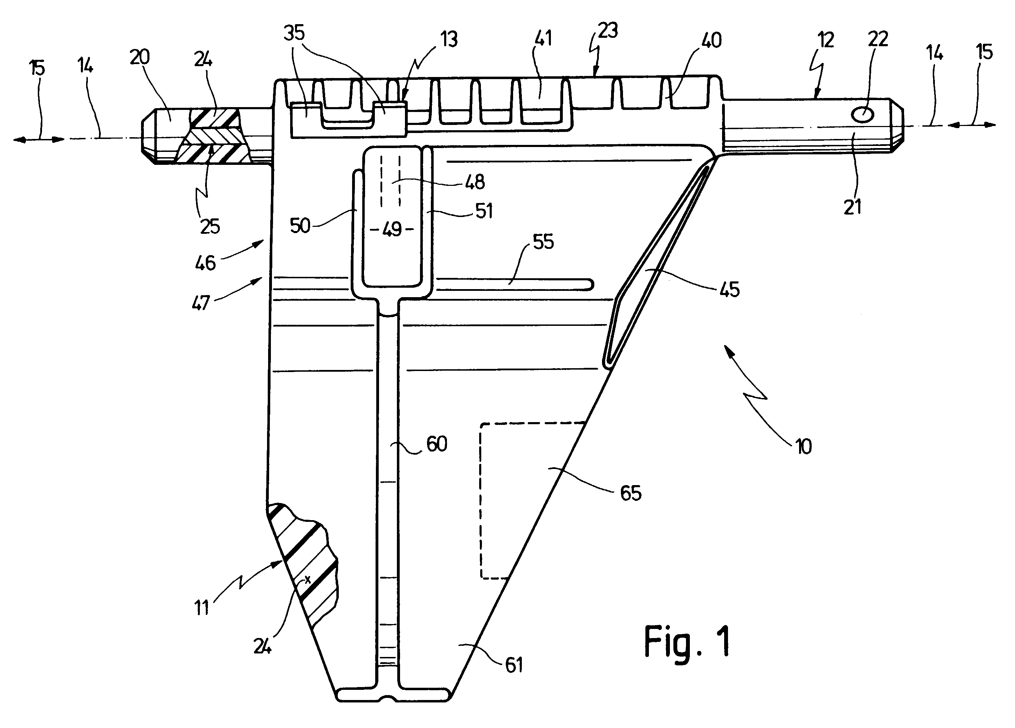

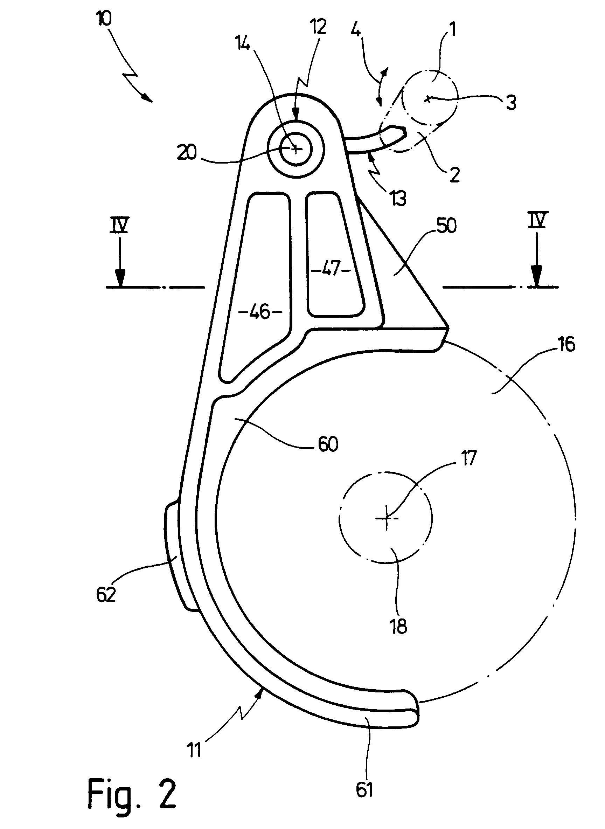

In den Fig. 1 und 2 ist ein Ausführungsbeispiel der Erfindung in Gesamtansicht dargestellt.

Man erkennt in Fig. 2 eine erste Schaltstange 1, die über einen seitlich vorstehenden ersten Mitnehmer 2 verfügt. Die erste Schaltstange 1 ist in Richtung einer ersten Achse 3 senkrecht zur Zeichenebene der Fig. 2 verschiebbar und zusätzlich um die erste Achse 3 in Richtung eines Pfeils 4 verdrehbar.

Die Bewegung der ersten Schaltstange 1 wird unmittelbar vom Gangschalthebel eines Kraftfahrzeuges abgeleitet. Die Drehung um die erste Achse 3 entspricht dabei dem Anwählen der einzelnen Schaltgassen, während die Bewegung entlang der ersten Achse 3 der Schalthebelbewegung innerhalb der Schaltgasse entspricht, wobei üblicherweise in zwei Endstellungen zwei Gänge anwahlbar sind.

Zum Einlegen der Gänge des Kraftfahrzeug-Stufengetriebes dient eine Betätigungsvorrichtung 10. Die Betätigungsvorrichtung 10 umfaßt eine Schaltgabel 11, die auf einer zweiten Schaltstange 12 sitzt. Die zweite Schaltstange 12 trägt ferner einen zweiten Mitnehmer 13. Mit 14 ist eine zweite Achse bezeichnet, die zugleich die Achse der zweiten Schaltstange 12 ist.

In Fig. 1 ist mit Pfeilen 15 angedeutet, daß die zweite Schaltstange 12 in axialer Richtung verschiebbar ist. In Drehrichtung ist die zweite Schaltstange 12 hingegen nicht verdrehbar.

In Fig. 2 ist mit 16 eine Schiebemuffe des Kraftfahrzeug-Stufengetriebes angedeutet. Die Schiebemuffe 16 ist entlang einer dritten Achse 17 axial verschiebbar und zwar aus einer neutralen Mittelstellung in zwei relativ zur Mittelstellung gegenüberliegende Endstellungen, die jeweils einem Gang des Stufengetriebes entsprechen. Mit 18 ist eine Getriebewelle des Stufengetriebes angedeutet, zu der oder von der beim Einlegen des Ganges eine drehstarre Verbindung hergestellt wird.

Insoweit handelt es sich bei der Betätigungsvorrichtung 10, abgesehen von den nachstehend beschriebenen Besonderheiten, um eine herkömmliche Betätigungsvorrichtung für ein Kraftfahrzeug-Stufengetriebe. Die drei Achsen 3, 14, 17 liegen dabei parallel zueinander und die Betätigung der ersten Schaltstange 1 über den Schalthebel, d.h. eine Verdrehung der ersten Schaltstange 1 in Richtung des Pfeiles 4 sowie eine nachfolgende axiale Bewegung der ersten Schaltstange 1 und damit über die Mitnehmer 2 und 13, der zweiten Schaltstange 12 führt zu einer axialen Verschiebung der Schiebemuffe 16 und damit zum Einschalten bzw. zum Ausschalten eines Getriebeganges.

Die Besonderheiten der Betätigungsvorrichtung 10 sind nun folgende:

Die Betätigungsvorrichtung 10 ist insgesamt als ein Kunststoff-Metall-Verbundbauteil ausgebildet.

Hierzu besteht die Betätigungsvorrichtung 10 im wesentlichen aus einem Kunststoff wie noch erläutert werden wird.

In Fig. 1 sind mit 20 und 21 zwei seitliche Achsstummel der Betätigungsvorrichtung 10 angedeutet, die in nicht näher gezeigter Weise im Getriebegehäuse gelagert sind. An einem Achsstummel, nämlich dem Achsstummel 21 ist eine Rastung 22 zu erkennen. Die Rastung 22 ist z.B. als Kalotte in den Kunststoff eingeformt. Die Rastung 22 dient in an sich bekannter Weise der gegenseitigen Verriegelung zweier paralleler Schaltstangen 12 durch einen seitlichen Riegelstift, der bei einer Betätigung einer zur zweiten Schaltstange 12 parallelen Schaltstange in die Rastung 22 eingreift und damit ein axiales Verschieben der zweiten Schaltstange 12 verhindert.

Auf der in Fig. 1 gegenüberliegenden Seite der Betätigungsvorrichtung 10 können weitere derartige Rastungen angebracht werden, beispielsweise federbelastete Kugelrastungen, die zur lösbaren Fixierung, insbesondere zur Druckpunktfixierung, der zweiten Schaltstange 12 in der mittleren axialen Neutralstellung und/oder den beiden gegenüberliegenden axialen Endstellungen dient.

In der Mitte der Betätigungsvorrichtung 10, d.h. zwischen den beiden Achsstummeln 20 und 21 ist die zweite Schaltstange 12 als Gabelabschnitt 23 ausgebildet. Der Gabelabschnitt 23 ist im achsnahen Bereich verdickt und läuft im achsfernen Bereich in die eigentliche Gabel aus, wie noch erläutert werden wird.

Es wurde bereits erwähnt, daß die Betätigungsvorrichtung 10 ein Kunststoff-Metall-Verbundbauteil ist, das somit im wesentlichen aus Kunststoff 24 besteht, wie an den aufgebrochenen Ansichten der Fig. 1 deutlich zu erkennen ist.

Ein Metallteil 25 ist lediglich im Bereich der zweiten Schaltstange 12 vorgesehen.

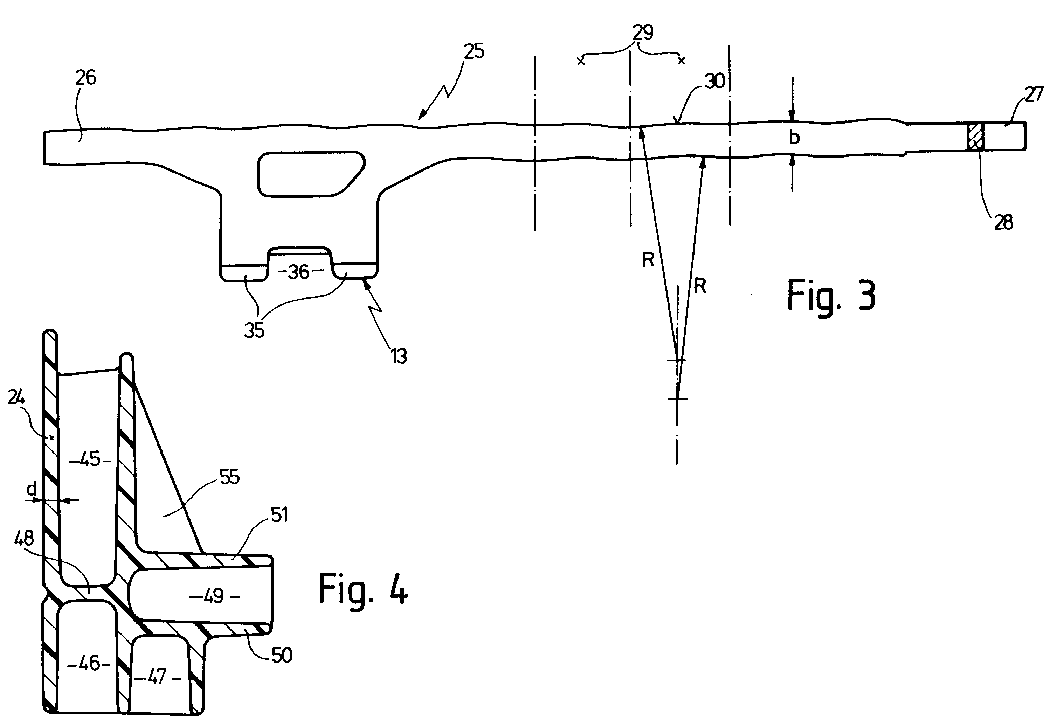

Wie die vergrößerte Darstellung der Fig. 3 zeigt, hat das Metallteil 25 ein linkes Ende 26 und ein rechtes Ende 27, deren Querschnitte jeweils flach-rechteckförmig sind, wie bei 28 angedeutet.

Diese langgestreckten Abschnitte des Metallteiles 25 sind in axialer Richtung in Segmente 29 unterteilt. Jedem Segment 29 entspricht ein Bauch und ein Tal eines wellenförmigen Profils 30, das so ausgebildet ist, daß die Breite b des Metallteils 25 in der Draufsicht von Fig. 3 stets konstant ist. Zur Ausbildung des wellenförmigen Profils 30 sind beide Seiten abschnittsweise jeweils näherungsweise kreisbogenförmig ausgeführt, wie mit Krümmungsradien R angedeutet.

Lediglich in der Nähe des linken Endes 26 ist das Metallteil 25 verbreitert und dort mit dem zweiten Mitnehmer 13 versehen. Der zweite Mitnehmer 13 ist von U-förmiger, d.h. gabelartiger Struktur. Zu diesem Zweck ist der zweite Mitnehmer 13 mit zwei beabstandeten Zähnen 35 versehen, zwischen denen ein Zwischenraum 36 verbleibt. Der Zwischenraum 36 ist so bemessen, daß der erste Mitnehmer zwei der ersten Schaltstange 1 nahezu formschlüssig darin aufgenommen werden kann.

Der zweite Mitnehmer 13 kann in axialer Sicht leicht abgekröpft ausgebildet sein, wie dies deutlich der Fig. 2 zu entnehmen ist.

Abgesehen von dem Metallteil 25 besteht die Betätigungsvorrichtung 10 ausschließlich aus dem Kunststoff 24.

Zur Herstellung der Betätigungsvorrichtung 10 wird daher das vorgefertigte Metallteil 25 in eine entsprechende Spritzform einer Spritzgießmaschine eingelegt und dann mit dem Kunststoff 24 umspritzt. Damit liegt die gesamte äußere Formgebung der Betätigungsvorrichtung 10 durch das Spritzgießwerkzeug fest.

Es wurde bereits erwähnt, daß der Gabelabschnitt 23 im achsnahen Bereich verdickt ausgebildet ist. Hierzu sind Rippen 40 vorgesehen, die äquidistant in axialer Richtung über den Gabelabschnitt 23 verteilt angeordnet sind und sich über einen Viertelkreis, einen Halbkreis und einen Dreiviertelkreis um die zweite Achse 14 herum erstrecken können. Zusätzlich zu den radialen Rippen 40 kann noch eine oder mehrere axial verlaufende Rippen 41 vorgesehen sein.

Der achsferne Bereich des Gabelabschnitts 23 wird über etwa die Hälfte der gesamten radialen Erstreckung durch eine Wabenstruktur gebildet. Hierunter versteht man eine Struktur mit einer Mehrzahl von hohlen Kammern, die voneinander durch Wände getrennt sind.

Bei dem dargestellten Ausführungsbeispiel sind, wie man insbesondere der Schnittdarstellung der Fig. 4 entnehmen kann, ist zunächst eine erste axiale Kammer 45 vorgesehen, die einer zweiten axialen Kammer 46 gegenübersteht. Eine dritte, ebenfalls axiale Kammer 47 ist neben der zweiten axialen Kammer 46 angedeutet. Die erste Kammer 45 und die zweite Kammer 46 sind über eine Trennwand 48 voneinander getrennt. Eine vierte, radial verlaufende Kammer 49 fluchtet mit der Trennwand 48. Ihre Begrenzungswände 50, 51 verleihen der vierten Kammer 49 einen im wesentlichen dreieckförmigen Querschnitt, wie man aus Fig. 2 erkennt. Die Begrenzungswände 50, 51 dienen dabei zugleich als radiale Querrippen. Eine ebenfalls dreieckförmige Längsrippe 55 ist auf der Oberseite der ersten Kammer 45 an die Begrenzungswand 51 der vierten Kammer 49 in axialer Richtung angeformt.

Aus der Darstellung der Fig. 4 erkennt man, daß die Dicke d aller Begrenzungswände 48, 50, 51 usw. etwa gleich groß ist.

Die Funktion der Schaltgabel 11 wird im wesentlichen durch eine kreissegmentförmige Schulter 60 gebildet, wie sie prinzipiell auch in herkömmlichen Schaltgabeln zu finden ist. Die Schulter 60 erstreckt sich über etwa ein Drittel ihres Umfanges entlang der vorstehend ausführlich geschilderten Wabenstruktur. Wie man deutlich der Darstellung von Fig. 1 entnehmen kann, fluchtet die Schulter 60 dabei in einer Radialebene mit der Trennwand 48 und damit auch mit der vierten Kammer 49.

Die radial äußeren zwei Drittel des Umfanges der Schulter 60 werden von einem Flansch 61 gehalten, der im wesentlichen eine auf einem gedachten Kreiszylinder liegende Oberfläche aufweist, sich aber radial nach außen verjüngt, wie deutlich Fig. 1 zu entnehmen ist. Der Flansch 61 kann an seiner Außenseite (vgl. Fig. 2) mit einer oder mehreren Verstärkungsrippen 62 versehen sein. Auch können eine oder mehrere Verstärkungssicken 65 am Flansch 61 vorgesehen werden.

Die Wirkungsweise der Betätigungsvorrichtung 10 im eingebauten Zustand entspricht vollkommen derjenigen herkömmlicher Betätigungsvorrichtungen, die aus mehreren metallischen Einzelteilen gefügt sind. Dies ist absichtlich so vorgesehen, weil die Betätigungsvorrichtung 10 ansonsten keine Veränderungen in der Bauart des Getriebes nach sich ziehen soll. Es sollen daher im übrigen unveränderte Schaltgestänge und auch unveränderte Schiebemuffen 16 im Getriebe verwendet werden.

Obwohl die Betätigungsvorrichtung 10 zum überwiegenden Teil aus dem Kunststoff 24 besteht und lediglich ein verhältnismäßig kleines Metallteil 25 für den mechanisch besonders belasteten zweiten Mitnehmer 13 sowie als Kern für die zweite Schaltstange 12 vorgesehen ist, hat sich bei praktischen Erprobungen gezeigt, daß die Betätigungsvorrichtung 10 gleichwohl herkömmlichen Betätigungsvorrichtungen aus metallischen Einzelteilen zumindest ebenbürtig, wenn nicht gar überlegen ist. So wurden in Langzeitversuchen Betätigungsvorrichtungen 10 erfindungsgemäßer Art mehreren einhunderttausend Schaltvorgängen ausgesetzt und zusätzlich Schaltvorgänge mit weitaus höheren Schaltkräften ausgeführt, als dies bei Schaltvorgängen in der Praxis der Fall ist. Es hat sich gezeigt, daß erfindungsgemäße Betätigungsvorrichtungen 10 diesen Belastungen standgehalten haben und Abnutzungserscheinungen praktisch nicht vorgekommen sind.

## Patentansprüche

1. Betätigungsvorrichtung für eine Schiebemuffe (16) in einem Kraftfahrzeug-Stufengetriebe, mit einer entlang ihrer Achse (14) verschiebbaren Schaltstange (12), an der eine Schaltgabel (11) sowie ein Mitnehmer (13) starr angeordnet sind, dadurch gekennzeichnet, daß die Betätigungsvorrichtung (10) als ein Kunststoff-Metall-Verbundbauteil ausgebildet ist, bei dem ein Metallteil (25), das den Mitnehmer (13) sowie einen Kern für die Schaltstange (12) bildet, mit einem Kunststoff (24) umspritzt ist und die Schaltgabel (11) ausschließlich aus dem Kunststoff (24) besteht.

2. Betätigungsvorrichtung nach Anspruch 1, dadurch gekennzeichnet, daß der Kunststoff (24) ein Polyamid ist.

3. Betätigungsvorrichtung nach Anspruch 1 oder 2, dadurch gekennzeichnet, daß der Kunststoff (24) glasfaserverstärkt ist.

4. Betätigungsvorrichtung nach einem oder mehreren der Ansprüche 1 bis 3, dadurch gekennzeichnet, daß die den Kern der Schaltstange (12) bildenden Abschnitte des Metallteiles (25) als flaches Rechteckprofil-Material (28) ausgebildet sind.

5. Betätigungsvorrichtung nach Anspruch 4, dadurch gekennzeichnet, daß die Abschnitte mit einem wellenförmigen Randprofil (30) versehen sind.

6. Betätigungsvorrichtung nach einem oder mehreren der Ansprüche 1 bis 5, dadurch gekennzeichnet, daß die Schaltstange (12) im axialen Abschnitt der Schaltgabel (11) verdickt ausgebildet ist.

7. Betätigungsvorrichtung nach Anspruch 6, dadurch gekennzeichnet, daß die Verdickung durch eine Mehrzahl radialer Rippen (40) gebildet wird.

8. Betätigungsvorrichtung nach einem oder mehreren der Ansprüche 1 bis 7, dadurch gekennzeichnet, daß die Schaltgabel (11) in einer Wabenstruktur mit einer Mehrzahl von durch Wände (48, 50, 51) voneinander getrennten Kammern (45, 46, 47, 49) ausgebildet ist.

9. Betätigungsvorrichtung nach Anspruch 8, dadurch gekennzeichnet, daß die Wabenstruktur eine radial von der Schaltstange (12) fort zunächst sich erweiternde und dann wieder verjüngende Gestalt aufweist.

10. Betätigungsvorrichtung nach Anspruch 8 oder 9, dadurch gekennzeichnet, daß die Schaltgabel (11) in an sich bekannter Weise eine kreissegmentförmige Schulter (60) zum Eingriff in die Schiebemuffe (16) aufweist und daß die Schulter (60) mindestens teilweise von der Wabenstruktur abgestützt ist.

11. Betätigungsvorrichtung nach Anspruch 10, dadurch gekennzeichnet, daß die Wabenstruktur in axialer Richtung höchstens jeweils zwei von einer Trennwand (48) getrennte Kammern (45, 46) umfaßt, und daß die Schulter (60) radial mit der Trennwand (48) fluchtet.

12. Betätigungsvorrichtung nach Anspruch 10 oder 11, dadurch gekennzeichnet, daß die Schulter (60) über einen Teil ihres Umfangs von einer sich im wesentlichen radial erstreckenden Kammer (49) abgestützt ist.

13. Betätigungsvorrichtung nach einem oder mehreren der Ansprüche 8 bis 12, dadurch gekennzeichnet, daß alle Wände (48, 50, 51) in der selben Dicke (d) ausgeführt sind.

## Claims

1. An actuator for a gearshift sleeve (16) in a stepped motor vehicle gearbox, comprising a gearshift rod (12) being displaceable along its axis (14), and having a gearshift fork (11) as well as an engaging piece (13) rigidly attached thereto, characterized in that the actuator (10) is configured as a composite structure made from plastic material and metal, the composite structure having a metallic component (25) constituting the engaging piece (13) as well as a core for the gearshift rod (12), and being embedded in plastic material by injection molding, the composite structure, further, comprising the gearshift fork (11) consisting exclusively from the plastic material.

2. The actuator of claim 1, characterized in that the plastic material (24) is polyamide.

3. The actuator of claim 1 or 2, characterized in that the plastic material (24) is glass fiber reinforced.

4. The actuator of any of claims 1 - 3, characterized in that those sections of the metallic component (25) forming the core of the gearshift rod (12) are configured as a flat rectangular-profile material.

5. The actuator of claim 4, characterized in that the sections are provided with an undulating edge profile (30).

6. The actuator of any of claims 1 - 5, characterized in that the gearshift rod (12) is configured at an enlarged axial section of the gearshift fork.

7. The actuator of claim 6, characterized in that the enlarged section is configured by a plurality of radial ribs (40) .

8. The actuator of any of claims 1 - 7, characterized in that the gearshift fork (11) is configured with a honeycomb structure having a plurality of chambers (45, 46, 47, 48) separated from one another by partition walls (48, 50, 51).

9. The actuator of claim 8, characterized in that the honeycomb structure, when viewed in a radial direction from the gearshift rod axis (12), first becomes wider in cross-section and then tapers down again.

10. The actuator of claim 8 or 9, characterized in that the gearshift fork (11) has a circular segment shoulder (60), known per se, for engagement with the gearshift sleeve (16), the shoulder (60) being at least partially supported by the honeycomb structure.

11. The actuator of claim 10, characterized in that the honeycomb structure in an axial direction comprises a maximum of two chambers (45, 46) each, separated by a partition wall (48), the shoulder (60) being radially aligned with the partition wall (48).

12. The actuator of claim 10 or 11, characterized in that the shoulder (60) is supported along a portion of its periphery by a chamber (49) extending substantially radially.

13. The actuator of any of claims 8 - 12, characterized in that all partition walls (48, 50, 51) have the same thickness (d).

## Revendications

1. Dispositif d'actionnement d'un crabot (16) dans une boîte de vitesses à rapports étagés d'un véhicule automobile, doté d'une tringle de changement de vitesses (12) susceptible de coulisser le long de son axe (14) et sur laquelle sont fixés de manière rigide une fourchette de boîte de vitesses (11) et un entraîneur (13), caractérisé en ce que le dispositif d'actionnement (10) se présente sous la forme d'un élément composite plastique/métal, dans lequel un élément métallique (25), qui constitue l'entraîneur (13) ainsi qu'une âme pour la tringle de changement de vitesses (12) est revêtu par extrusion d'une matière plastique (24) et en ce que la fourchette de boîte de vitesses (11) est intégralement réalisée en cette matière plastique (24).

2. Dispositif d'actionnement selon la revendication 1, caractérisé en ce que la matière plastique (24) est un polyamide.

3. Dispositif d'actionnement selon la revendication 1 ou 2, caractérisé en ce que la matière plastique (24) est renforcée par des fibres de verre.

4. Dispositif d'actionnement selon l'une ou plusieurs des revendications 1 à 3, caractérisé en ce que les parties de l'élément métallique (25) qui forment l'âme de la tringle de changement de vitesses (12) se présentent sous la forme d'un matériau plat de profil rectangulaire (28).

5. Dispositif d'actionnement selon la revendication 4, caractérisé en ce que les parties présentent un bord (30) au profil ondulé.

6. Dispositif d'actionnement selon l'une ou plusieurs des revendications 1 à 5, caractérisé en ce que la tringle de changement de vitesses (12) est plus épaisse dans la partie axiale de la fourchette de boîte de vitesses (11).

7. Dispositif d'actionnement selon la revendication 6, caractérisé en ce que l'épaississement est assuré par une pluralité de nervures radiales (40).

8. Dispositif d'actionnement selon l'une ou plusieurs des revendications 1 à 7, caractérisé en ce que la fourchette de boîte de vitesses (11) est réalisée dans une structure en nid d'abeille comportant une pluralité de chambres (45, 46, 47, 49) séparées les unes des autres par des parois (48, 50, 51).

9. Dispositif d'actionnement selon la revendication 8, caractérisé en ce que la structure en nid d'abeille affecte une forme qui se prolonge en s'évasant tout d'abord radialement depuis la tringle de changement de vitesses (12) avant de se rétrécir à nouveau.

10. Dispositif d'actionnement selon la revendication 8 ou 9, caractérisé en ce que la fourchette de boîte de vitesses (11) présente d'une manière connue en soi un épaulement (60) en forme de segment de cercle pour s'engager dans le crabot (16) et en ce que l'épaulement (60) est soutenu au moins partiellement par la structure en nid d'abeille.

11. Dispositif d'actionnement selon la revendication 10, caractérisé en ce que la structure en nid d'abeille englobe à chaque fois dans la direction axiale au maximum deux chambres (45, 46) séparées par une paroi de séparation (48), et en ce que l'épaulement (60) affleure radialement avec la paroi de séparation (48).

12. Dispositif d'actionnement selon la revendication 10 ou 11, caractérisé en ce que l'épaulement (60) est soutenu sur une partie de sa périphérie par une chambre (49) sensiblement radiale.

13. Dispositif d'actionnement selon l'une ou plusieurs des revendications 8 à 12, caractérisé en ce que toutes les parois (48, 50, 51) sont réalisées avec la même épaisseur (d).
